# EUROPEAN PATENT APPLICATION

(11) **EP 3 951 668 A1**
(43) Date of publication of application: **09.02.2022**
(21) Application number: 20778465.3
(22) Date of filing: 19.03.2020
(51) Int. Cl.: G06Q 10/00

(54) **APPARATUS CONTROL ASSISTING DEVICE, PROGRAM, AND CONTROL ASSISTING METHOD**

(30) Priority: 28.03.2019 JP 2019063172
(71) Applicant: KABUSHIKI KAISHA TOSHIBA, Minato-ku Tokyo 105-0023 (JP); Toshiba Digital Solutions Corporation, Kawasaki-shi, Kanagawa 212-0013 (JP)
(72) Inventor: YANO, Rei, Kawasaki-shi, Kanagawa 212-0013 (JP); HARASHIMA, Shuji, Kawasaki-shi, Kanagawa 212-0013 (JP); KITAGAWA, Takayuki, Kawasaki-shi, Kanagawa 212-0013 (JP); IRISAWA, Kazuya, Kawasaki-shi, Kanagawa 212-0013 (JP)
(74) Representative: Moreland, David
(86) International application number: PCT/JP2020/012455
(87) International publication number: WO 2020/196320

(57) **Abstract**

According to one embodiment, a control support apparatus communicably connected to at least one predetermined device includes a managing unit 102 configured to manage the predetermined device in association with internal information of the predetermined device and manage the predetermined device in association with external information disclosed for the predetermined device, and an analyzing unit 103 configured to generate analysis information by analyzing an operation state of a target device of the predetermined device based on internal information related to the target device and external information corresponding to the target device.

## Description

### FIELD

Embodiments described herein relate generally to a technique for supporting control of a device.

### BACKGROUND

CPS (Cyber-Physical System) has been proposed and known as a generic name of the technique for simulating or analyzing data in cyberspace, i.e. information space, based on sensed information about physical space, i.e. real world environment, and feeding back the result to physical space. Recently, work has been progressing on applying the CPS to design sites and manufacturing sites of devices.

Devices distributed on the market are generally designed by a design engineer, and their parts are manufactured or ordered to be manufactured by outside manufacturers. The devices are manufactured by performing multiple assembly processes and tests, and comprehensive tests. By applying the CPS to these manufacturing processes, it is possible to accumulate various types of information generated in each manufacturing process, monitor occurrence of abnormality in each manufacturing process, and solve the problem before proceeding to the next process.

### BRIEF DESCRIPTION OF DRAWINGS

[FIG. 1] FIG. 1 is a diagram illustrating an overall configuration of a control support system according to an embodiment.
[FIG. 2] FIG. 2 is a block diagram showing a hardware configuration of a control support apparatus according to the embodiment.
[FIG. 3] FIG. 3 is a block diagram showing a functional configuration of the control support apparatus according to the embodiment.
[FIG. 4] FIG. 4 is a diagram illustrating design specification information.
[FIG. 5] FIG. 5 is a diagram showing product specification information.
[FIG. 6] FIG. 6 is a diagram showing planned event information.
[FIG. 7] FIG. 7 is a diagram showing unexpected event information.
[FIG. 8] FIG. 8 is a diagram showing device detection information relating to escalators.
[FIG. 9] FIG. 9 is a diagram showing situation detection information relating to escalators.
[FIG. 10] FIG. 10 is a diagram showing device detection information relating to a robot cleaner.
[FIG. 11] FIG. 11 is a diagram showing situation detection information relating to a robot cleaner.
[FIG. 12] FIG. 12 is a flowchart showing overall operation of the control support apparatus.
[FIG. 13] FIG. 13 is a flowchart showing operation of analysis processing.
[FIG. 14] FIG. 14 is a flowchart showing operation of generation processing.
[FIG. 15] FIG. 15 is a flowchart showing operation of evaluation processing.
[FIG. 16] FIG. 16 is a schematic diagram illustrating operation of a robot cleaner to which the control support system is not applied.
[FIG. 17] FIG. 17 is a schematic diagram illustrating operation of a robot cleaner to which the control support system is applied.
[FIG. 18] FIG. 18 is a schematic diagram illustrating an example of operation of devices by the control support system.
[FIG. 19] FIG. 19 is a schematic diagram illustrating devices to which the control support system can be applied.

### DETAILED DESCRIPTION

The embodiments will be explained by reference to the accompanying drawings.

### (Overall configuration)

Overall configuration of the control support system according to the present embodiment will be described.

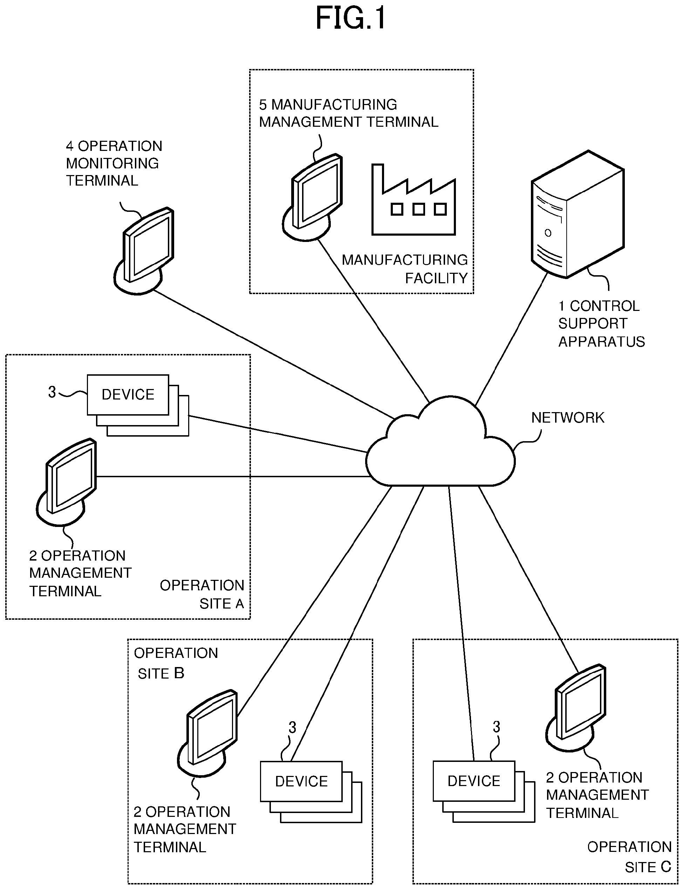

As shown in FIG. 1, a control support system according to the present embodiment is a system for providing control support to devices 3, and includes a control support apparatus 1, an operation management terminal 2, and an operation monitoring terminal 4. In this embodiment, assume that the control support system is used in operation sites A to C, and each site has a plurality of devices 3 and an operation management terminal 2 used by an administrator who manages the operation of these devices 3. Further, the operation monitoring terminal 4 used by a supervisor who monitors the operation state of the devices 3 at any of the operation sites A to C is provided at a different location from the operation sites A to C. Further, assume that a manufacturing management terminal 5 used by an administrator who controls each process related to manufacturing of the devices 3 is installed in a facility for manufacturing the devices 3.

The administrator may be a person who manages the equipment installed in a building, and the supervisor may be a person who does not manage the equipment but needs the status of the equipment, such as a building owner and an insurance company that handles insurance of the building. Assume that the control support apparatus 1, the operation management terminal 2, the devices 3, the operation monitoring terminal 4, and the manufacturing management terminal 5 are all connected to a network, and the control support apparatus 1 is connected to the operation management terminal 2, the devices 3, the operation monitoring terminal 4, and the manufacturing management terminal 5 via the network.

Each of the devices 3 is equipped with a sensor for detecting a state of a device 3, and each of the operation sites A to C is equipped with a sensor for detecting a state of an operation site related to the operation of the device 3. Assume that these sensors are also connected to the control support apparatus 1 via the operation management terminal 2 or directly via the network.

The operation management terminal 2, the operation monitoring terminal 4, and the manufacturing management terminal 5 can log in to the control support system by an ID and authentication information representing each user, and the operation management terminal 2 and the devices 3 operated in the operation site, in which the operation management terminal 2 is installed, are associated with each other in advance.

### (Configuration of control support apparatus)

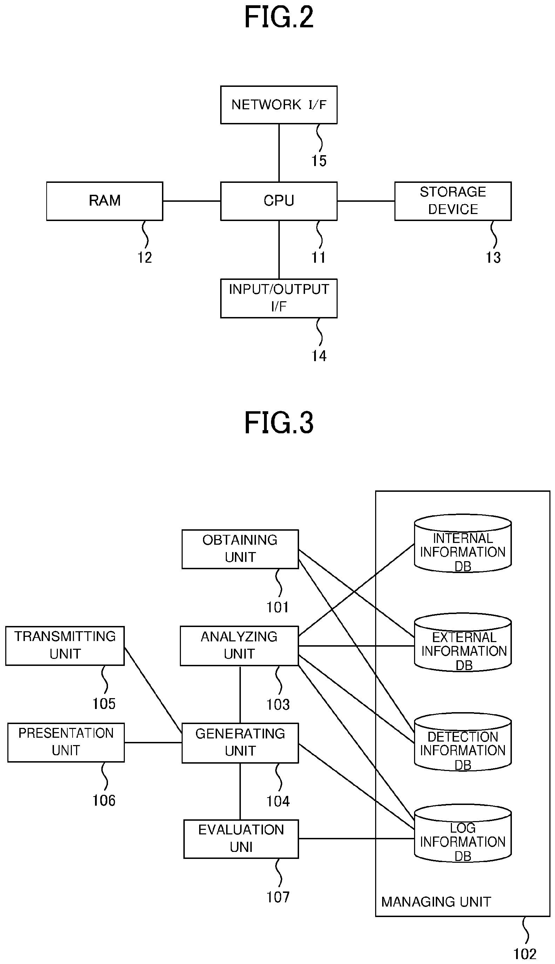

The hardware configuration and functional configuration of the control support apparatus will be described. FIGs. 2 and 3 are block diagrams respectively showing the hardware configuration and the functional configuration of the control support apparatus according to the embodiment.

As shown in FIG. 2, the control support apparatus 1 includes, as hardware, a CPU (Central Processing Unit) 11, a RAM (Random Access Memory) 12, a storage device 13, an input/output I/F (interface) 14, and a network I/F15. The CPU 11 and the RAM 12 cooperate to execute the functions, and the storage device 13 stores various types of data used for processing (control support program) executed by the functions. The input/output I/F 14 inputs and outputs data to and from input devices such as a keyboard and output devices such as a display connected to the control support apparatus 1. The network I/F 15 performs wired or wireless communication with other devices such as the operation management terminal 2, the devices 3, and the operation monitoring terminal 4. In the present embodiment, the operation management terminal 2, the operation monitoring terminal 4, and the manufacturing management terminal 5 have substantially the same hardware configuration as that of the control support apparatus 1, and thus the description thereof will be omitted.

As shown in FIG. 3, the control support apparatus 1 includes, as functions, an obtaining unit 101, a managing unit 102, an analyzing unit 103, a generating unit 104, a transmitting unit 105, a presentation unit 106, and an evaluation unit 107. The obtaining unit 101 obtains internal information, external information, and detection information, which will be described later, via the network. The managing unit 102 manages an internal information DB (database), an external information DB, a detection information DB, and a log information DB, which will be described later. The analyzing unit 103 analyzes the operation state of a target device 3 by using AI (Artificial Intelligence), for example, based on various types of information managed by the managing unit 102. The generating unit 104 generates control information for controlling the device 3 based on the analysis result by the analyzing unit 103. The transmitting unit 105 transmits the control information generated by the generating unit 104 to the target device 3. The presentation unit 106 presents the analysis result by the analyzing unit 103 and the control information generated by the generating unit 104 to the administrator who uses the operation management terminal 2 and the supervisor who uses the operation monitoring terminal 4. The evaluation unit 107 assigns evaluation points to the analysis result by the analyzing unit 103 and the control information generated by the generating unit 104 based on the input from the operation management terminal 2.

### (Internal Information)

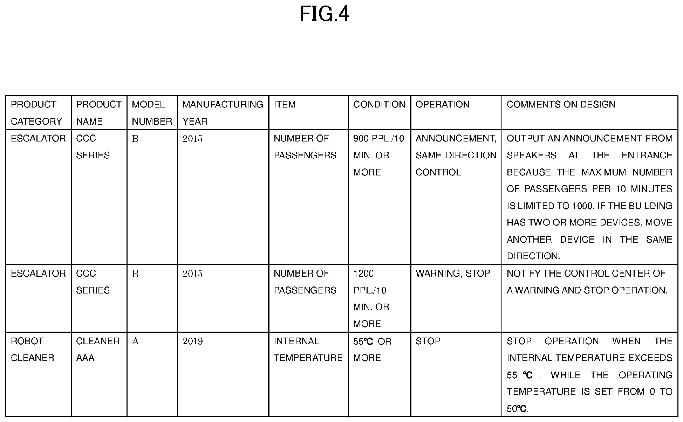

The internal information stored in the internal information DB will be described. FIG. 4 is a diagram illustrating design specification information.

The internal information is information provided by the manufacturer of the device 3, which is a target of analysis and control support, and includes, for example, design specification information, manufacturing process information, post-distribution information. The design specification information is determined by a design engineer, in which, for example, use conditions and detailed thresholds are associated with a model of the device 3. In the manufacturing process information, traceability information such as information of each manufacturing process, test information, and various sensor data in manufacturing equipment is associated with the model of the device 3. The post-distribution information is information available to the manufacturer of the device 3 after the device 3 is distributed to the market, in which defective information, failure information, repair information, and claim information are associated with the model of the device 3 and the manufacturing line of the device 3.

Examples of the model of the device 3 include a "model number" to classify devices 3 having the same configuration, and a "series (product name)" to classify devices 3 using the same design method. The respective pieces of information included in the internal information are stored in the storage device of the manufacturing management terminal 5, and are obtained by the obtaining unit 101 of the control support apparatus 1 via the network.

As shown in FIG. 4, the design specification information includes a product category indicating a type of a device 3, a product name indicating a series of the device 3, a model number of the device 3, a manufacturing year of the device 3, a condition indicating a predetermined threshold, an item indicating a classification of the condition, an operation when the condition is satisfied, and comments on design indicating comments by the designer regarding a the desirable operation under the corresponding condition, which are associated with one another. For example, the design specification information includes information of the CCC series B, which is an escalator, indicating that an announcement is output from the speaker at the entrance when the number of passengers is 900 or more per 10 minutes, and the other escalator is controlled to move in the same direction if the building has two or more escalators. Further, the information of the CCC series B includes that, when the number of passengers is 1200 or more per 10 minutes, a warning is notified to the control center to stop the operation. Further, the information of A of the cleaner AAA, which is a robot cleaner, includes that the operation is stopped when the temperature inside the cleaner A reaches 55 degrees or more.

### (External Information)

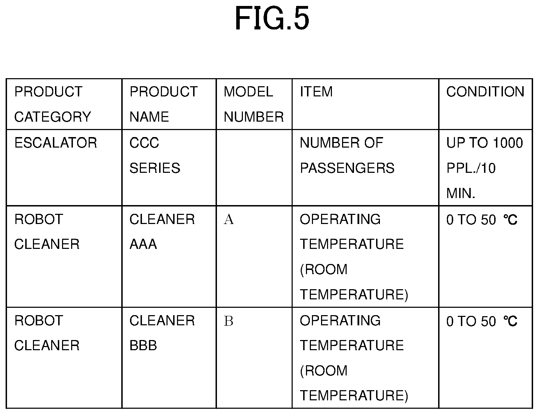

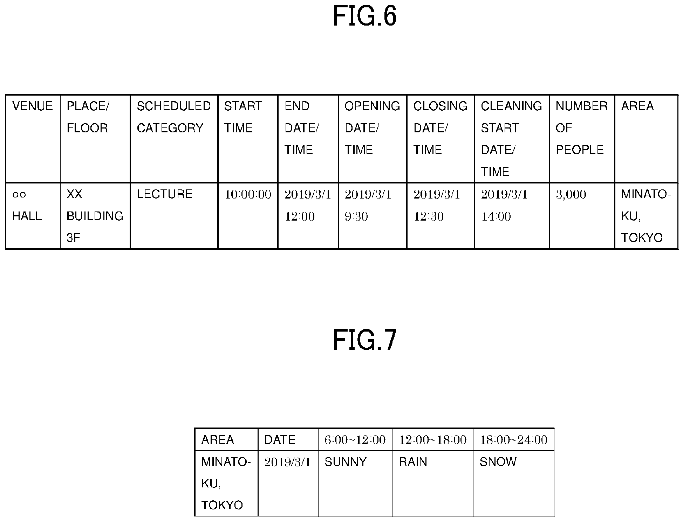

The external information stored in the external information DB will be described. FIG. 5 is a diagram showing product specification information. FIG. 6 is a diagram showing planned event information. FIG. 7 is a diagram showing unexpected event information.

The external information is information available to the administrator of the operation site of the device 3, and includes, for example, product specification information, planned event information, unexpected event information, and SNS (Social Networking Service) information. The product specification information is a product specification published on the Internet. The planned event information is information related to events to be carried out as planned in the operation site, such as exhibitions, sporting events, concerts, festivals, and sales, and is entered in the operation management terminal 2, for example. The unexpected event information is information on an event that cannot be controlled by the administrator of the operation site, such as climate, and information disclosed on the Internet is used. The product specification information, the unexpected event information, and the SNS information are obtained by the obtaining unit 101 of the control support apparatus 1 using a known method, such as web scraping. The planned event information is obtained by the obtaining unit 101 via the network after being entered in the operation management terminal 2.

As shown in FIG. 5, the product specification information includes a product category indicating a type of a device 3, a product name indicating a series of the device 3, a model number of the device 3, a condition indicating a predetermined threshold, and a classification of the condition, which are associated with one another. For example, the product specification information includes the information of the CCC series B, which is an escalator, indicating that the number of passengers is up to 1000 per 10 minutes and the information of A of the cleaner AAA and D of the cleaner BBB, which are robot cleaners, indicating that the operating temperature is 0 degrees or more and 50 degrees or less.

As shown in FIG. 6, the planned event information includes a venue, place/floor, a scheduled category, start date/time, end date/time, venue opening date/time, venue closing date/time, cleaning start date/time, number of people, and an area, which are associated with one another. The planned event information includes, for example, information about a lecture in which 3000 people gather at 10:00 to 12:00 on Friday, March 1, 2019, at OO Hall in the third floor of xx Building in Minato-ku, Tokyo, and that the venue opening time is 9:30, the venue closing time is 12:30, and the cleaning start time is 14:00.

As shown in FIG. 7, the unexpected event information includes an area, a date, and some time frames in association with one another. The unexpected event information includes, for example, information indicating that the weather in the respective time frames of 6:00 to 12:00, 12:00 to 18:00, and 18:00 to 24:00 in Minato-ku, Tokyo is clear, rain, and snow.

### (Detection Information)

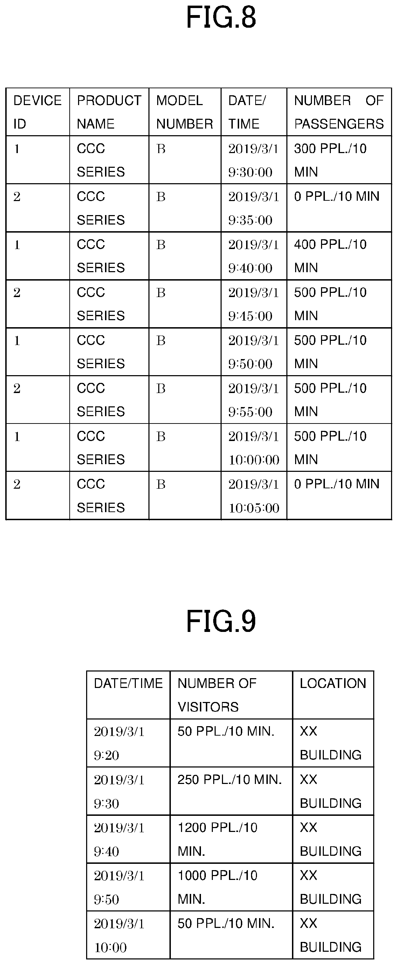

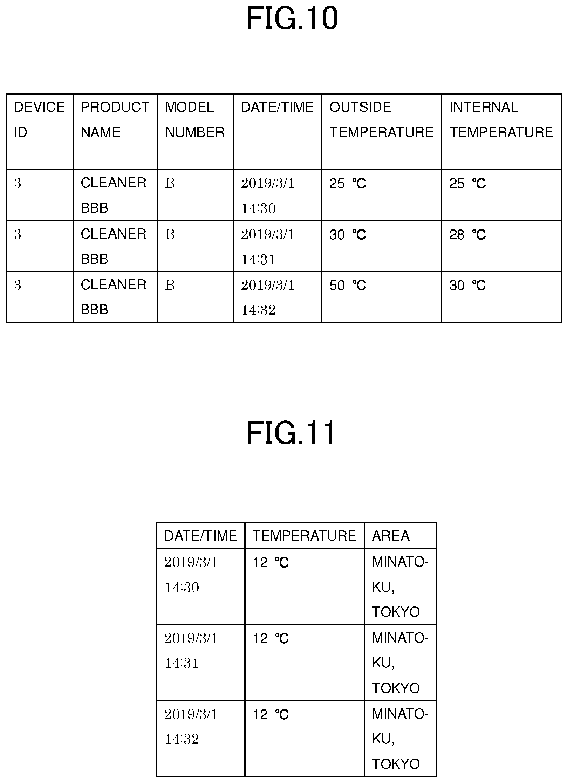

Detection information accumulated in the detection information DB will be described. FIG. 8 is a diagram showing device detection information relating to escalators. FIG. 9 is a diagram showing situation detection information relating to escalators. FIG. 10 is a diagram showing device detection information relating to a robot cleaner. FIG. 11 is a diagram showing situation detection information relating to a robot cleaner.

The detection information includes device detection information including measured values by the sensor provided in the device 3 and situation detection information including measured values by the sensor installed in the operation site of the device. Examples of the measured values included in the device detection information are temperature, vibration, angular velocity, image, and sound. Examples of the measured values included in the situation detection information are the number of visitors to the facility as the operation site where the device 3 is provided, temperature at the facility, and amount of electric power used at the facility.

As shown in FIGs. 8 and 10, the device detection information includes a device ID uniquely indicating each device 3, a product name, a model number, a date and time indicating a measurement time, and a measured value in association with one another. For example, as shown in FIG. 8, in the device detection information relating to escalators, the number of visitors to the facility per 10 minutes is accumulated as time series data, and, as shown in FIG. 10, in the device detection information relating to robot cleaners, outside temperature of the robot and internal temperature of the robot are accumulated as time series data.

As shown in FIGs. 9 and 11, the situation detection information includes a date and time indicating a measurement time, a measured value, and a location or an area in association with one another. For example, as shown in FIG. 9, in the situation detection information related to the escalator, the number of visitors to the building as the operation site is accumulated as time series data, and as shown in FIG. 11, in the situation detection information related to the robot cleaner, the temperature of the area where the operation site is located is accumulated as time series data.

### (Overall Operation)

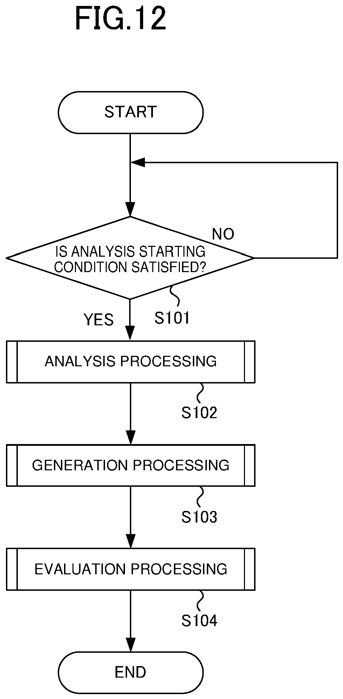

The overall operation of the control support apparatus will be described. FIG. 12 is a flowchart showing the overall operation of the control support apparatus. In the control support apparatus, assume that the types of information described above are obtained at predetermined time intervals.

As shown in FIG. 12, the analyzing unit 103 determines whether an analysis starting condition is satisfied based on the types of information obtained by the obtaining unit 101 (S101). The analysis starting condition is a condition for starting an analysis processing to be described later, and is determined by, for example, a previously executed analysis result. When the control support apparatus 1 is operated, the analysis processing may be executed unconditionally. Examples of the analysis start condition include whether a current date and time has reached a date and time included in the planned event information and whether a measured value that stands out compared with the past measurement values has been detected.

If the analysis starting condition is satisfied (S101, YES), the analyzing unit 103 executes analysis processing for analyzing the operation state of a device 3, as a target device, related to the analysis starting condition to generate analysis information (S102), the generating unit 104 executes generation processing for generating control information for controlling the target device based on the analysis information about the target device (S103), and the evaluation unit 107 executes evaluation processing for evaluating the analysis information and the control information (S104). On the other hand, if the analysis starting condition is not satisfied (S101, NO), the analyzing unit 103 again determines whether the analysis starting condition is satisfied (S101). The analysis information and the control information based on the analysis information are associated with the target device and stored in the log information DB as log information.

### (Analysis Processing)

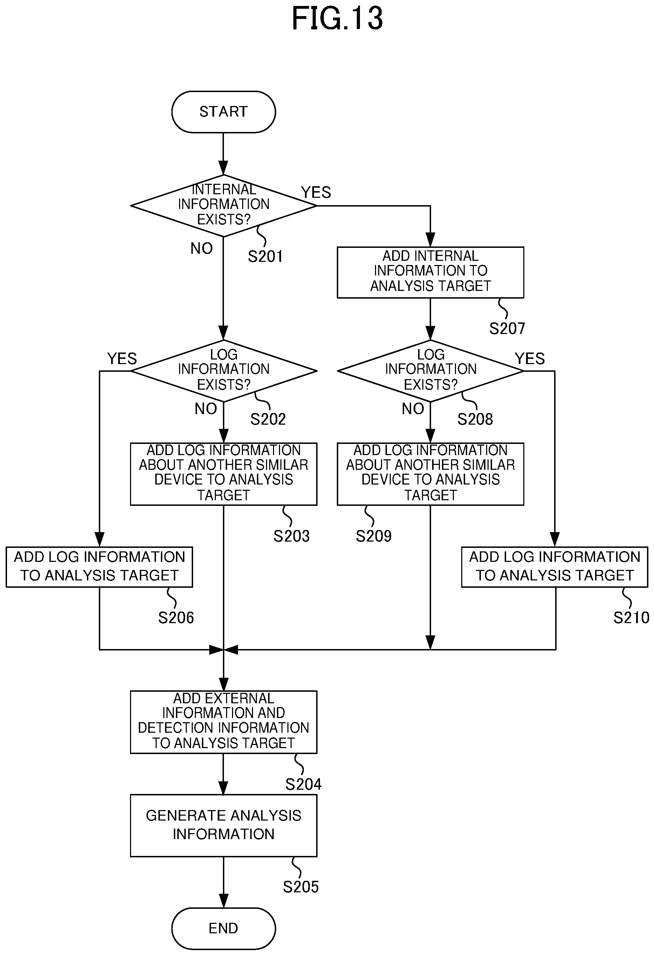

The operation of the analysis processing will be described. FIG. 13 is a flowchart showing the operation of the analysis processing. In this embodiment, assume that all devices have some kind of external information and detection information, and devices with and without internal information and log information are mixed.

As shown in FIG. 13, the analyzing unit 103 determines whether the internal information of the target device exists (S201). For example, the analyzing unit 103 determines whether the design specification information includes information relating to the device 3 having the same model number as the target device.

If the internal information of the target device does not exist (S201, NO), the analyzing unit 103 determines whether the log information of the target device exists (S202).

If the log information about the target device does not exist (S202, NO), the analyzing unit 103 adds log information about another device 3 similar to the target device to the analysis target (S203). Here, another similar device 3 is a device 3 that is similar to the target device in the external information.

Next, the analyzing unit 103 adds the external information and the detection information about the target device to the analysis target (S204), and generates analysis information indicating the analysis result of the operation state of the target device based on all the information included in the analysis target (S205).

In step S202, if the log information about the target device exists (S202, YES), the analyzing unit 103 adds the log information about the target device to the analysis target (S206), and adds the external information and the detection information about the target device to the analysis target (S204).

In step S201, if the internal information about the target device exists (S201, Yes), the analyzing unit 103 adds the internal information about the target device to the analysis target (S207), and determines whether the log information about the target device exists (S208).

If the log information about the target device does not exist (S208, NO), the analyzing unit 103 adds the log information about another device 3 having similar internal information to the target device to the analysis target (S209), and adds the external information and the detection information about the target device to the analysis target (S204).

On the other hand, if the log information about the target device exists (S208, YES), the analyzing unit 103 adds the log information about the target device to the analysis target (S210), and adds the external information and the detection information about the target device to the analysis target (S204).

As described, in the case where the information about the target device is lacking, the information about another device 3 having similar external information is added to the analysis target. This can supplement information necessary for the analysis of the operation state.

### (Generation Processing)

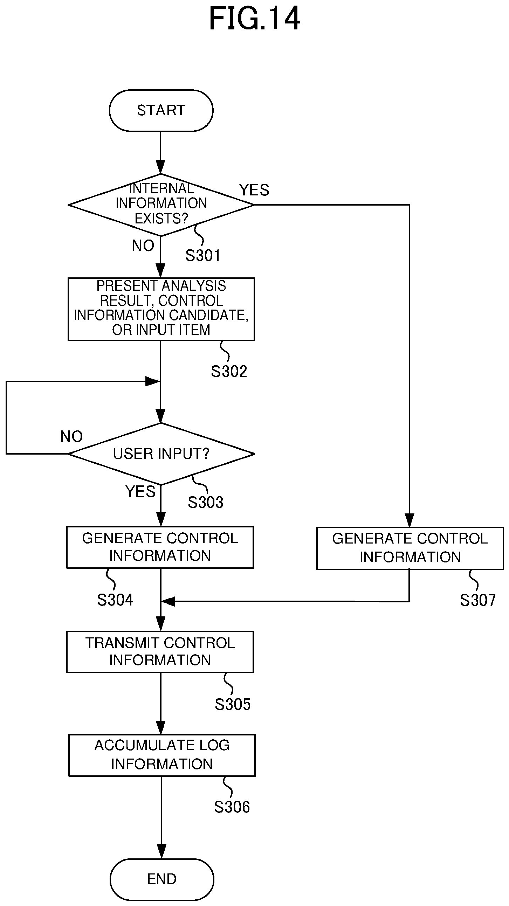

The operation of the generation processing will be described. FIG. 14 is a flowchart showing the operation of the generation processing.

As shown in FIG. 14, the generating unit 104 determines whether the internal information of the target device exists (S301).

If the internal information about the target device does not exist (S301, NO), the generating unit 104 generates a plurality of control information candidates or input items for inputting information required for control of the target device based on the analysis information about the target device generated by the analyzing unit 103, and the presentation unit 106 presents the plurality of control information candidates or the input items to the administrator together with the analysis result indicated in the analysis information via the operation management terminal 2 that manages the target device (S302). Here, the control information candidate is generated based on the internal information about the device 3 having similar external information to the target device.

Next, the generating unit 104 determines whether a user input has been made for the presentation of the control information candidates or the input items (S303). Here, the generating unit 104 determines that a user input has been made when any one of the control information candidates has been selected or input to any input item has been made in the operation management terminal 2.

If a user input is made (S303, YES), the generating unit 104 generates control information based on the selected control information candidate or a parameter entered in the input item and the analysis information (S304), the transmitting unit 105 transmits the control information to the target device (S305), and the managing unit 102 associates the analysis information with the control information for the target device, and accumulates the associated information as log information in the log information database (S306).

On the other hand, if a user input is not made (S303, NO), the generating unit 104 determines again whether the user input is made (S303).

In step S301, if the internal information about the target device exists (S301, Yes), the generating unit 104 generates control information based on the internal information and the analysis information about the target device (S307), and the transmitting unit 105 transmits the control information to the target device (S305).

In this manner, the control information based on the internal information of another similar device 3 or the entered parameter and the analysis information is generated, and it is thereby possible to generate the control information for the target device lacking the internal information. Further, the log information including such control information is used in the subsequent analysis processing, whereby accuracy of the control by the control information can be improved.

### (Evaluation Processing)

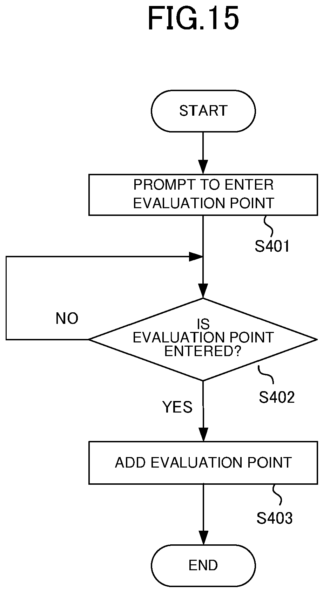

The evaluation processing will be described. FIG. 15 is a flowchart showing the operation of the evaluation processing.

As shown in FIG. 15, the evaluation unit 107 prompts the administrator to enter, via the operation management terminal 2 that manages the target device, an evaluation point as evaluation for the analysis of the operation information of the target device indicated by the analysis information and evaluation for the control of the target device based on the control information (S401), and determines whether the evaluation point is entered (S402).

If the evaluation point is entered (S402, YES), the evaluation unit 107 adds the evaluation point to the log information about the target device in the log information DB (S403).

On the other hand, if the evaluation point is not entered (S402, NO), the evaluation unit 107 determines again whether the evaluation point is entered (S402).

As described, the evaluation point is added to the log information, and the priority can be thus set for the log information used in the analysis processing.

### (First Specific Example)

A specific example of a case where the target device in the control support system is an escalator will be described.

Assume that the model number B of CCC series, two escalators installed in a building (xx buildings) in Minato-ku, Tokyo, are the target devices. Assume that a measured value of a sensor provided in the escalators is acquired as the device detection information, and a measured value of a sensor, which counts the number of visitors and is installed at the entrance of the building, is acquired as the situation detection information.

Also assume that the external information DB includes planned event information about an event to be held in a hall of the building. This planned event information indicates, for example, that there is a lecture in which 3000 people participate from 10:00 to 12:00 on Friday, March 1, 2019, and that the opening time is 9:30 and the closing time is 12:30 (FIG. 6).

The analyzing unit 103 executes analysis processing, triggered by the opening time 9:30 in the planned event information, for the model number B of the CCC series installed in the xx building as the target device. This target device has design specification information as the internal information. As shown in FIG. 4, such design specification information indicates that, when the number of passengers exceeds 900 per 10 minutes, an announcement is output from a speaker at the entrance/exit of the escalator, the other escalator is controlled to move in the same direction if the building has two or more escalators, and a warning is notified to the control center and the operation is stopped when the number exceeds 1200 per 10 minutes.

Assume that the two escalators installed in the building respectively have device ID 1 and device ID 2, and that, normally, the escalator (device ID 1) moves upward and the escalator (device ID 2) moves downward. The analyzing unit 103 analyzes the operation state of the escalators (device IDs 1, 2) based on the transition of the number of passengers in the device detection information shown in FIG. 8 and the transition of the number of visitors in the situation detection information shown in FIG. 9.

The device detection information shows, at 9:40, the number of passengers in the escalator (device ID 1) is 400 per 10 minutes, and the status detection information shows the number of visitors to the building at the same time exceeds 1200 per 10 minutes. Based on the detection information, the analyzing unit 103 predicts that people concentrate on the escalator (device ID 1) after several minutes, and predicts that the escalator (device ID 1) may be stopped based on the design specification information. Further, the analyzing unit 103 recognizes that the number of passengers of the escalator (device ID 2) is relatively small. The analyzing unit 103 generates such an analysis result as analysis information.

Based on the analysis information generated by the analyzing unit 103, the generating unit 104 generates control information for controlling the escalator (device ID 2) as the target device in the same direction (upward direction) as the escalator (device ID 1) at 9:45. After the lecture starting time at 10:00, the number of visitors decreases drastically, and thus the generating unit 104 generates control information for returning the escalator (device ID 2) to the normal operation (downward direction). When the lecture finishing time at 12:00 arrives, the generating unit 104 generates control information for controlling the escalator (device ID1) as the target device to move in the same direction (downward direction) as the escalator (device ID 2).

### (Second Specific Example)

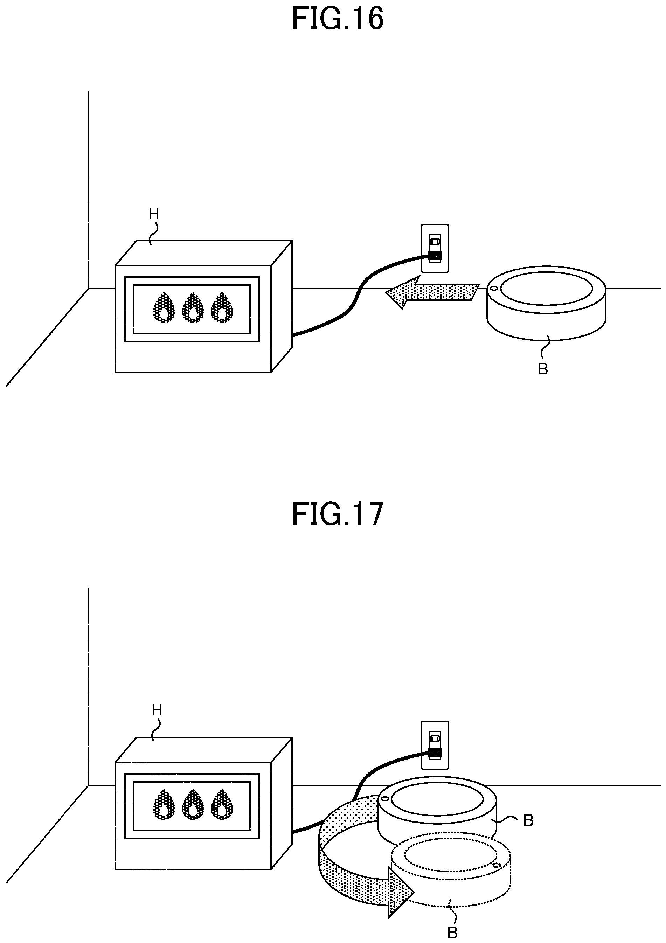

A specific example in which the target device in the control support system is a robot cleaner will be described. FIG. 16 is a schematic diagram illustrating an operation of a robot cleaner to which the control support system is not applied. FIG. 17 is a schematic diagram illustrating an operation of a robot cleaner to which the control support system is applied.

Assume that the model number B of the cleaner BBB, which is a robot cleaner operated in the xx building where the escalator described above is installed, is the target device. The measured values of the internal temperature sensor and the external temperature sensor included in the robot cleaner (hereinafter, robot cleaner B) is obtained as the device detection information, and the measured values of the temperature sensor installed in the area where the xx building is located is obtained as the situation detection information. The robot cleaner B is operated on the floor where the lecture indicated in the planned event information is held.

As shown in FIG. 6, the robotic cleaner B starts cleaning of the floor at 14:00 after the closing of the lecture. As shown in FIG. 10, the outside temperature and the internal temperature of the robot cleaner B are obtained every minute as the device detection information. In addition, as shown in FIG. 11, the temperature of the area where the xx building is located (Minato-ku, Tokyo) is obtained every minute as the situation detection information. The analyzing unit 103 starts the analysis processing, triggered by the fact that the outside temperature of the robot cleaner measured at 14:32 and included in the device detection information is more prominent than at other times.

The analyzing unit 103 refers to the unexpected event information shown in FIG. 7 and the situation detection information shown in FIG. 11 and estimates that something abnormal happens in the robot cleaner B on the basis that no variation is found in the air temperature of the xx building at the time when the prominent outside temperature is measured, the weather in the corresponding time frame is rain, and the outside temperature of the robot cleaner B is greatly increased as compared with the internal temperature of the robot cleaner B. Specifically, as shown in FIG. 16, the analyzing unit 103 estimates that the robot cleaner B is approaching a heat source H.

The analyzing unit 103 refers to the product specification information (FIG. 5) as external information because no design specification information as internal information exists for the robot cleaner B, and further refers to the design specification information of A of the cleaner AAA (hereinafter, robot cleaner A), which has the design specification information similar to that of the robot cleaner B (FIG. 4). The design specification information of the robot cleaner A indicates that the robot cleaner A automatically stops when the internal temperature exceeds 55 degrees. Based on these pieces of information, the analyzing unit 103 generates analysis information indicating that the robot cleaner B automatically stops when the robot cleaner B continues to move straight.

The generating unit 104 generates the analysis information and a plurality of control information candidates (e.g., stop, 180 degree turn, reverse) or input items of parameters necessary for the control. The presentation unit 106 presents the control information candidates or the input items to the operation management terminal 2 corresponding to the robot cleaner B. If a control information candidate is selected or a parameter is input to an input item by the operation management terminal 2, the generating unit 104 generates control information based on the selected control information candidate or the input parameter, and the transmitting unit 105 transmits the control information to the robot cleaner B. For example, if the 180 degree turn is selected as the control information candidate, as shown in FIG. 17, the robot cleaner B is turned in a direction opposite to the heat source H, and this prevents the robot cleaner B from approaching the heat source H, and thus, prevents the robot cleaner B from automatically stopping or coming into an accident that may occur when in contact with the heat source H.

### (Example of Operation of Control Support System)

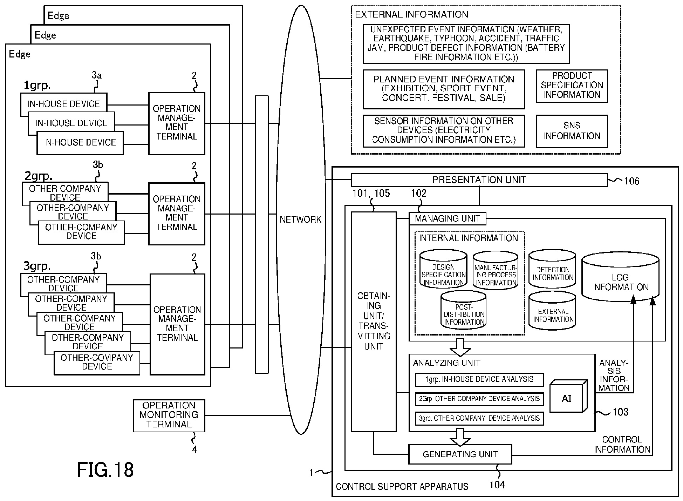

An example of the operation of the control support system will be described. FIG. 18 is a schematic diagram illustrating an example of the operation of devices by the control support system.

FIG. 18 shows the control support apparatus 1 connected to an operation site (Edge) where a plurality of operation management terminals 2 are installed among a plurality of Edges. The operation management terminals 2 are respectively connected to device groups. The device group 1grp includes a plurality of in-house devices 3a, which are devices 3 manufactured by a company that operates the control support system, and the device groups 2grp and 3grp include a plurality of other-company devices 3b, which are devices 3 manufactured by other companies.

In the control support apparatus 1, the analyzing unit 103 analyzes the operation state of the in-house device 3a based on the information group including the internal information related to the in-house device 3a, and analyzes the operation state of the other-company device 3b based on the information group (external information such as event information) not including the internal information because the inside information related to the other-company device 3b is not stored in the control unit 102.

The generating unit 104 generates control information for controlling the in-house device 3a and the other-company device 3b based on the analysis information generated by the analyzing unit 103. The generated control information is transmitted by the transmitting unit 105 to the operation management terminals that manages the corresponding devices. The analysis information and the control information are accumulated as log information and used for the subsequent analysis.

### (Example of application of Control Support System)

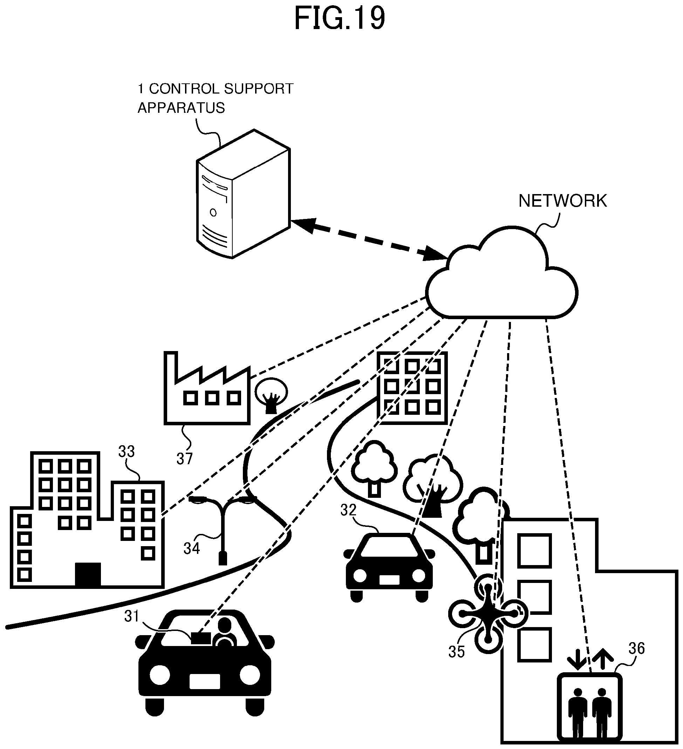

An example of application of the control support system will be described. FIG. 19 is a schematic diagram illustrating devices to which the control support system can be applied.

In the embodiment described above, an escalator and a robotic cleaner have been described as examples of the device 3, although the device 3 to which control support of the control support system is provided may be any device, as shown in FIG. 19, such as a car navigation device 31 for manned vehicles, an unmanned vehicle 32, a building facility 33 such as an air conditioning, a street lamp 34, a drone (unmanned aircraft) 35, an elevator 36, and a production facility 37 of a factory.

If the car navigation device 31 is a target device, it is considered that the operation management terminal 2 is implemented as one of the functions of the navigation device 31. If the unmanned vehicle (e.g., taxi, bus, truck) 32 is a target device, it is considered that a terminal installed in a management center of a management company of each vehicle is used as the operation management terminal 2.

It is conceivable that the operation management terminal 2 for managing the building facility 33 is installed in a building management center, the operation management terminal 2 for managing the street lamp 34 is installed in a management center of a local government, and the operation management terminal 2 for managing the drone 35 is installed in a management center of the drone. If the elevator 36 is a target device, it is considered that the operation management terminal 2 is installed in a building management center, and the operation monitoring terminal 4 is installed in a management center of an insurance company or an elevator maintenance company, and the same applies to the case where an escalator is a target device.

In the embodiments, the control support program is described as being previously installed in the control support apparatus, although the control support program in the embodiments includes a program stored in a storage medium. In this regard, the storage medium includes any medium readable and executable by a computer as the control support apparatus described above, such as a magnetic tape, a magnetic disc (e.g., hard disk drive), an optical disc (e.g., CD-ROM, DVD disc), a magneto-optical disc (e.g., MO), and a flash memory that can be connected and disconnected to the control support apparatus, and a medium that can be transmitted via a network.

While certain embodiments have been described, these embodiments have been presented by way of example only, and are not intended to limit the scope of the inventions. Indeed, the novel embodiments described herein may be embodied in a variety of other forms. Furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A control support apparatus that is communicably connected to at least one predetermined device, comprising:
a managing unit configured to manage the predetermined device in association with internal information of the predetermined device and manage the predetermined device in association with external information disclosed for the predetermined device; and
an analyzing unit configured to generate analysis information by analyzing an operation state of a target device of the predetermined device based on internal information related to the target device and external information corresponding to the target device.

2. The control support apparatus according to claim 1, further comprising a generating unit configured to generate control information for controlling the target device based on the analysis information generated for the target device.

3. The control support apparatus according to claim 2, wherein
the managing unit manages the predetermined device in association with log information including the analysis information generated for the predetermined device and the control information generated for the predetermined device.

4. The control support apparatus according to claim 3, wherein
in a case where the internal information corresponding to the target device does not exist, the analyzing unit analyzes the operation state of the target device based on log information corresponding to another device corresponding to external information similar to the external information corresponding to the target device, and generates analysis information.

5. The control support apparatus according to claim 3 or 4, wherein
the control support apparatus is communicably connected to a management terminal that manages the predetermined device, and
the control support apparatus further includes an evaluation unit configured to obtain an evaluation value of the analysis information and the control information, which are generated for the target device and entered in the management terminal, and add the evaluation value to log information corresponding to the target device.

6. The control support apparatus according to claim 2, further comprising a presentation unit configured to present, in the management terminal, an input item of a parameter for controlling the target device based on the analysis information generated for the target device, wherein
the generating unit generates the control information for the target device based on a parameter entered in the input item.

7. The control support apparatus according to any one of claims 1 to 6, wherein
the internal information includes a design specification of the predetermined device.

8. The control support apparatus according to any one of claims 1 to 7, wherein
the external information includes at least one of information on an unexpected event that occurs unexpectedly, information on a planned event that is scheduled as planned, and a product specification of the predetermined device.

9. A control support program executed in a computer communicably connected to at least one predetermined device, the control support program causing the computer to function as:
a managing unit configured to manage the predetermined device in association with internal information provided by a manufacturer of the predetermined device, and manage the predetermined device in association with external information disclosed for the predetermined device; and
an analyzing unit configured to generate analysis information by analyzing an operation state of a target device of the predetermined device based on internal information related to the target device and external information corresponding to the target device.

10. A control support method executed in a computer communicably connected to at least one predetermined device,
the computer configure to:
manage the predetermined device in association with internal information provided by a manufacturer of the predetermined device, and manage the predetermined device in association with external information disclosed for the predetermined device, and
generate analysis information by analyzing an operation state of a target device of the predetermined device based on internal information related to the target device and external information corresponding to the target device.

11. A control support apparatus communicably connected to at least one predetermined device, comprising:
a managing unit configured to manage the predetermined device in association with external information disclosed for the predetermined device;
an analyzing unit configured to generate analysis information by analyzing an operation state of a target device of the predetermined device based on external information corresponding to the target device; and
a generating unit configured to generate control information for controlling the target device based on an analysis target generated for the target device.
